**Europäisches Patentamt**

**European Patent Office**

**Office européen des brevets**

(19)

(11) Veröffentlichungsnummer: **0 143 150**

**B1**

(12)

# EUROPÄISCHE PATENTSCHRIFT

(45) Veröffentlichungstag der Patentschrift:
**08.06.88**

(51) Int. Cl.⁴: **F 16 L 23/02**

(21) Anmeldenummer: **84103709.6**

(22) Anmeldetag: **04.04.84**

(54) **Flanschverbindung.**

(30) Priorität: **24.11.83 CH 6301/83**

(43) Veröffentlichungstag der Anmeldung:
**05.06.85 Patentblatt 85/23**

(45) Bekanntmachung des Hinweises auf die Patenterteilung:
**08.06.88 Patentblatt 88/23**

(84) Benannte Vertragsstaaten:
**AT BE CH DE FR GB IT LI LU NL SE**

(56) Entgegenhaltungen:
**DE-C-3 207 990**
**DE-C-3 214 693**

(73) Patentinhaber: **Schmidlin AG, Zürichstrasse 19, CH-8910 Affoltern a.A. (CH)**

(72) Erfinder: **Schmidlin, Walter, Mühlrütistrasse 12, CH- 8910 Affoltern a.A. (CH)**

(74) Vertreter: **Scheidegger, Zwicky, Werner & Co., Stampfenbachstrasse 48 Postfach, CH- 8023 Zürich (CH)**

EP 0 143 150 B1

## Beschreibung

Die Erfindung betrifft eine Flanschverbindung zwischen einander anschliessenden, im Querschnitt rechteckförmigen Kanälen, an deren Kanalseitenwänden jedes der Kanäle eine der Anzahl der Kanalseitenwände entsprechende Anzahl von Profilschienen angeordnet ist, die im wesentlichen im Querschnitt U-förmig ausgebildet sind und innenseitige Sicken oder Abbiegungen am Profil als Seitenführungen für zwischen diesen und dem Steg der Profilschiene an jeder Kanalecke eingeschobene Eckwinkelstücke aufweisen.

Eine für diesen Zweck vervendbare Profilschiene ist aus der schweizerischen Patentschrift Nr. 528 682 bekannt. Diese bekannte Profilschiene besitzt eine in den nutenförmigen Kragen am Kanalende passende geschlossene Bördelung und eine mit dieser über einen Steg verbundene, ebenfalls geschlossene Bördelung, sodass die Profilschiene eine zum Kanalende hin offene U-Form mit den beiden Bördelungen als Schenkel bildet, und zwei mit der offenen Seite gegeneinander zeigende Profilschienen an den miteinander zu verbindenden Kanalenden bei gegenseitiger Anlage der aussen befindlichen Bördelungen durch die Stege hindurch verschraubt werden können. Die bekannte Profilschiene besitzt aufgrund der vielen Abbiegungen ein grosses Materialvolumen, ist entsprechend schwer und auch aufwendig in der Herstellung.

Weitere verschraubbare Flanschverbindungen für Kanäle sind aus den schweizerischen Patenten No. 495 523 und No. 536 969 bekannt. Bei diesen Flanschverbindungen sind im Querschnitt im wesentlichen L-förmig ausgebildete Profilschienen, von denen der eine Schenkel zur Bildung des Flansches bestimmt ist, mit dem anderen Schenkel auf das Ende jeder Kanalseitenwand aufgeschoben und müssen dort beispielsweise durch Punktschweissung befestigt werden. Die jeweils über die Länge einer Kanalseitenwand sich erstreckenden Profilschiene sind an den Enden offen und an den Kanalecken ist in die jeweils im rechten Winkel zueinander stehenden Profil schienen ein Eckwinkelstück mit je einem Schenkel in eine am Ende offene Profilschiene eingeschoben, sodass ein durch diese Eckwinkelstücke ergänzter Verbindugsflansch eine ringsum laufende Anlagefläche für eine Dichtung besitzt. In den aus Flachstahl bestehenden Eckwinkelstücken ist jeweils im Schnittpunkt der beiden Schenkel eine Durchgangsbohrung für eine Verbindungsschraube zum Verbinden von stumpf aneinander anschliessenden Kanälen vorgesehen.

Eine aus der DE-C-3 207 990 bekannte Profilschiene besitzt ebenfalls einen im wesentlichen L-förmigen Querschnitt und besteht aus einem doppelt liegenden gefalzten Blech, bei dem die im Abstand parallel verlaufenden Blechlagen im einen Schenkel des L-förmigen Querschnitts einen Einschiebkanal für das Eckwinkelstück umschliessen und die beiden übereinander liegenden und abgewinkelten Blechstreifen des anderen Schenkels des L-förmigen Querschnitts mit den beiden längsverlaufenden Blechendkanten eine Einschieböffnung für die Kanalseitenwand bilden, an der dieser doppellagige Schenkel der Profilschiene ebenfalls mittels Punktschweissung zu befestigen ist. Damit aber durch das Schweissen keine Verwerfungen im Blech auftreten muss mindestens eine der Blechlagen mit längsverlaufenen Sicken versehen werden. Wenn man auf die Befestigungsweise der Profilschienen durch Schweissen verzichten will, kommt diese ausserdem noch für das Schweissen mit zusätzlichen Verformungsarbeiten herzustellende Profilschiene nicht in Betracht.

Ein aus der DE-C-3 214 693 bekanntes Profil dieser Art ist in der bevorzugten Ausführungsform ebenfalls zum Anschweissen an die Kanalseitenwände bestimmt. Eine abgewandelte Ausführungsform weist am einen Schenkel des Profils einen durch mehrfache Abbiegungen gebildeten Umschlag zur Bildung eines zur offenen Profilseite hin offenen Einschiebschlitzes auf, damit in diesen eine gerade Kanalseitenwand hineingeschoben werden kann, in welcher Rastnasen ausgebildet sind, die sich an der einwärts gebogenen Blechkante des Umschlags verhaken sollen. An diesem Befestigungsrand weist daher der mit dem Kanal zu verbindende Schenkel des Profils vier übereinanderliegende Blechlagen auf, was angesichts der dafür erforderlichen umfangreichen Biegearbeiten eine ziemlich teure Ausführungsform darstellt. Die Verbindung mit dem Kanal ende durch einfaches Verhaken über Rastnasen ist ausserdem nicht sehr zuverlässig, vor allem wenn das Gewicht sehr langer und grosser Kanalstücke durch die Verklammerung gehalten werden soll.

Der vorliegenden Erfindung liegt die Aufgabe zugrunde, eine Flanschverbindung der eingangs bezeichneten Art mit Hilfe von wesentlich einfacher ausgebildeten Profilschienen zu schaffen, wobei das Kanal ende in die Verbindung integriert wird und jegliche Schweissarbeit für die Herstellung der Verbindung entfällt Diese Aufgabe wird durch die Flanschverbindung mit den Merkmalen gemäss Anspruch 1 gelöst. Diese Flanschverbindung besitzt den Vorteil, dass die für diese verwendeten Profilschienen mit wenig Materialaufwand herzustellen sind und dass bei dieser Art der Verbindung Schweissarbeiten oder das Setzen von Mieten nicht notwendig sind, so dass auch keine dadurch bedingte Korrosion auftreten kann.

Ferner ist es möglich, die Profilschienen erst am Montageort auf einfache Weise mit den Kanalenden zu verbinden.

Weitere Einzelheiten und Vorteile der Erfindung ergeben sich aus der nachfolgenden Beschreibung und den Zeichnungen, in deren Fig. 1, 2, 4 und 5 die Erfindung rein beispielsweise dargestellt ist. Es zeigen:

Fig. 1 die Profilschiene in Ansicht auf eine Seitenfläche, in grösserem Masstab;

Fig. 2 zwei analoge Profilschienen im Querschnitt, am Ende je einer Kanalseitenwand mit einem nutenförmigen Kragen angebracht;

Fig. 3 zwei analoge Profilschienen im Querschnitt, die am Ende je einer Kanalseitenwand mit einem rechtwinkligen Abbug angebracht sind, um eine Erfindungsähnliche Flanschverbindung zu bilden;

Fig. 4 einen aus vier Profilschienen und Eckwinkelstücken gebildeten Flansch am Kanal ende in Frontansicht;

Fig. 5 zwei analoge Profilschienen im Querschnitt, an je einer Kanalseitenwand angebracht und mit einer Klammer zusammengepresst.

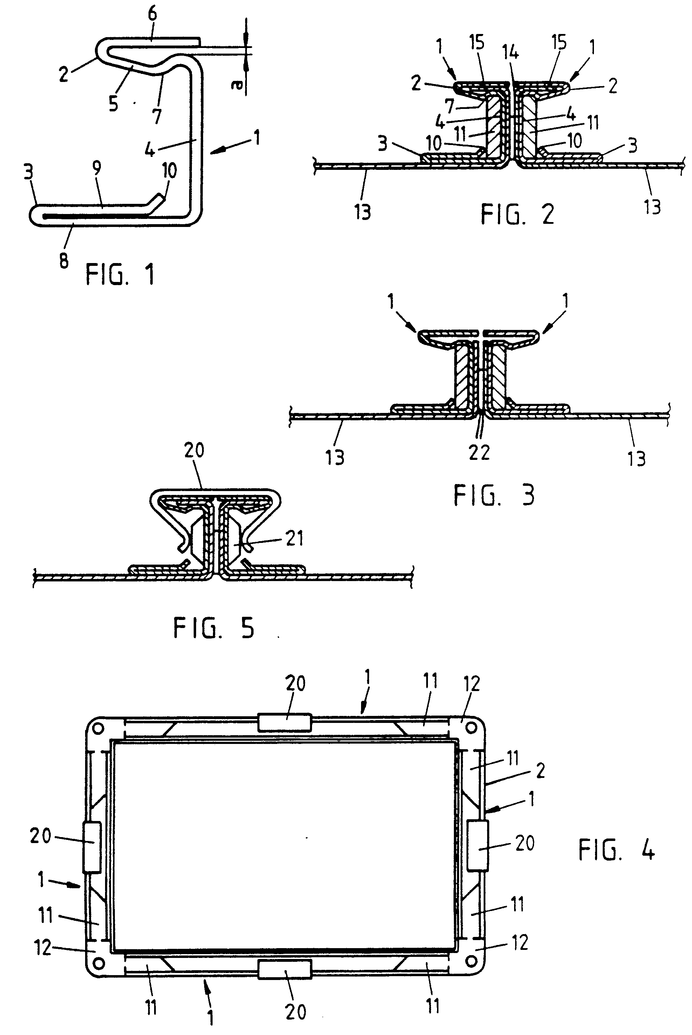

Die in Fig. 1 dargestellte Profilschiene 1 weist einen im wesentlichen U-förmigen Querschnitt mit einem oberen gefalzten Schenkel 2 und einem unteren gefalzten Schenkel 3 und einem diese verbindenden Steg 4 auf. Der gefalzte und eine Innere Blechlage 5 sowie eine äussere Blechlage 6 aufweisende Schenkel 2 weist an der inneren Blechlage 5 im Abstand von Steg 4 eine längsverlaufende Sicke 7 auf, die eine zur Innenseite des U-Profils vorstehende Kante bildet. Die äussere Blechlage 6 ist in Bezug auf das U-Profil nach aus sen zurückgebogen. Zwischen der inneren Blechlage und der äusseren Blechlage 6 des gefalzten Schenkels 2 ist ein Abstand "a" vorhanden, der dazu bestimmt ist, dass die Profilschiene mit diesem Schenkel auf den parallel zur Kanalwand zurückgebogenen Schenkel eines nutenförmigen Kragens am Kanalende aufgeschoben werden kann.

Der untere gefalzte Schenkel 3 der Profilschiene 1 besteht ebenfalls aus einer äusseren Blechlage 8 und einer inneren Blechlage 9, die in Bezug auf das U-Profil nach einwärts zurückgebogen ist, sodass die innere und äussere Blechlage sich unmittelbar berühren, und die am Endrand eine schräg nach oben abgebogene Kante 10 aufweist, die den gleichen Abstand vom Steg 4 der Profilschiene 1 aufweist, wie die Kante 7 am oberen Schenkel 2.

Die beiden zur Innenseite vorstehenden Kanten 7 und 10 an den beiden Stegen 2 und 3 der Profilschiene 1 haben, wie aus Fig. 2 hervorgeht, die Funktion, dass zwischen diesen beiden Kanten und dem Steg 4 der Profilschiene ein entsprechend breiter Schenkel 11 eines Eckwinkelstückes 12 festgehalten ist, welches in Fig. 4 in Seitenansicht erkennbar ist. Ein solches Eckwinkelstück 12 besitzt zwei im rechten Winkel zueinander angeordnete Schenkel 11, die sich jeweils in eine Profilschiene 1 am Ende von zwei zueinander senkrechten Kanalseitenwänden 13 hinein erstrecken. Gemäss Fig. 2 weisen diese Kanalseitenwände 13 jeweils am Ende einen nutenförmigen Kragen 14 auf. Dieser nutenförmige Kragen 14 besitzt einen parallel zur Kanalseitenwand 13 zurückgebogenen Schenkel 15, auf den die Profilschiene 1 mit dem oberen gefalzten Schenkel 2 derart aufgeschoben ist, dass die inneren Blechlage 5 und die äussere Blechlage 6 die ses Schenkels 2 den Schenkel 15 des nutenförmigen Kragens 14 umfassen.

Aus Fig. 2 geht auch hervor, dass zur Herstellung einer Flanschverbindung zwischen aneinander anschliessenden Kanälen 2 analoge Profilschienen 1 gegen den nutenförmigen Kragen 14 von je zwei Kanalseitenwänden 13 zur Anlage gebracht werden, welche stumpf aneinander stossen, sodass zur Herstellung einer Flanschverbindung zwischen im Querschnitt rechteckförmigen sind. Die Länge einer Profilschiene ist zweckmässig gleich der in Umfangsrichtung des Kanals gemessenen Breite einer Kanalwand, wie aus Fig. 4 hervorgeht. Zum Verbinden von zwei aneinander anschliessenden Kanälen, die nach Zusammenfügen der Profilschienen 1 und der Eckwinkelstücke 12 jeder am Ende einen Flansch gemäss Fig. 4 aufweisen, werden die Eckwinkelstücke 12 paarweise mitenander verschraubt.

Gemäss Fig. 5 werden zusätzlich Klammern 20 auf je zwei gegeneinander liegende Profilschienen 1 aufgeschoben. Diese Klammern 20 erstrecken sich nur über einen kurzen Bereich der Profilschienen 2, wie aus Fig. 4 hervorgeht und sorgen dafür, dass die Flansche an den Kanalenden, zwischen denen vorzugsweise noch eine Dichtung eingelent ist, ringsum aneinander gedrückt gehalten werden. Aus Fig. 5 geht ferner hervor, dass am Steg 4 der Profilschiene 1 an jener Stelle, an der eine Klammer 20 angeordnet werden soll, zusätzlich noch ein noppenartiger Vorsprung 21 angebracht werden kann, damit die Druckkraft einer entsprechend ausgebildeten Klammer 20 besser zur Wirkung kommt.

In Fig. 3 ist dargestellt, dass die gleiche Profilschiene 1 gemäss Fig. 1 in entsprechender Weise wie in Fig. 2 auch zum Verbinden von zwei Kanelen verwendet werden kann, bei denen die Kanalwand 13 am Ende nur einen rechtwinkligen Abbug 22 aufweist. In diesem Fall erstreckt sich in den oberen gefalzten Schenkel 2 der Profilschiene 1 kein Teil der Kanalwand hinein. Im übrigen ist die Herstellung einer Flanschverbindung mit einem gemäss Fig. 3 ausgebildeten Kanalende gleich wie zuvor gemäss Fig. 4 und 5 beschrieben worden ist.

**Patentansprüche**

1. Flanschverbindung zwischen einander anschliessenden, im Querschnitt rechteckförmigen Kanälen, an deren Kanalseitenwänden (13) jedes der Kanäle eine der Anzahl der Kanalseitenwände entsprechende Anzahl von Profilschienen (1) angeordnet ist, die im wesentlichen im Querschnitt U-förmig ausgebildet sind und innenseitige Sicken oder Abbiegungen (7, 10) am Profil als Seitenführungen für zwischen diesen und dem Steg (4) der Profilschiene (1) an jeder Kanalecke eingeschobene Eckwinkelstücke (11) aufweisen, dadurch gekennzeichnet, dass der eine Schenkel (2) der im wesentlichen im Querschnitt U-förmigen und zwei je aus einer inneren (5, 9) und einer äusseren (6, 8) Blechlage bestehende Schenkel (2, 3) aufweisenden Profilschiene (1) von der offenen U-Seite nach auswärts zurückgebogen ist und zwischen der inneren (5) und der äusseren (6) Blechlage einen Schlitz zur Aufnahme des Endrandes (15) eines am Kanalseitenwandende ausgebildeten nutenförmigen Kragens (14, 15) bildet, gegen welchen die Profilschiene (1) anliegt, dass die innere Blechlage (5) des gleichen Schenkels (2) eine zur Innenseite vorstehende, längsverlaufende und als Seitenführung für ein Eckwinkelstück (11) dienende Sicke (7) im Abstand vom Steg (4) der Profilschiene (1) aufweist und der andere Schenkel (3) der Profilschiene nach einwärts zurückgebogen ist und am Endrand der inneren Blechlage (9) eine einwärts gerichtete und als weitere Seitenführung dienende Randabbiegung (10) im gleichen Abstand vom Steg (4) wie die Sicke (7) aufweist.

2. Flanschverbindung nach Anspruch 1, dadurch gekennzeichnet, dass die mit ihrem Steg (4) einander zugewandt an den Kanalenden (13, 14, 15) von aneinander anschliessenden Kanälen angeordneten Profilschienen (1) mittels auf die beiden von der Kanalwand abgewandten Schenkel (2) aufgeschobener Klammern (20) und mittels durch Bohrungen in den Ecken der Eckwinkelstücke (11 ) sich hindurcherstreckender Verschraubungen miteinander verbunden sind.

### Claims

1. A flange connection between adjoining rectangular-section channels each having on its side walls (13) section bars (1) to the number of such side walls, the bars being in cross-section substantially U-shaped and having internal corrugations or bent parts (7, 10) on the section as lateral guides for corner angle members (11) introduced between them and the web (4) of the section bar (1), characterised in that one arm (2) of the substantially U-section bar (1), the same having two arms (2, 3) each comprising an inner sheetmetal layer (5, 9) and an outer sheet-metal layer (6, 8), is bent back outwardly from the open side of the U and bounds between the inner layer (5) and outer layer (6) a slot adapted to receive the end edge (15) of a groove-like collar (14, 15) contrived at the end of the channel side wall, the section bar (1) engaging the collar (14, 15), the inner layer (5) of the same arm (2) has an inwardly projecting longitudinal corrugation (7), operative as lateral guide for a corner angle member (11), at a distance from the web (4) of the bar (1) and the other arm (3) of the bar (1) is bent back inwardly and has at the end edge of the inner layer (9) an inwardly directed edge bend (10), operative as a further lateral guide, at the same distance from the web (4) as the corrugation (7).

2. A flange connection according to claim 1, characterised in that the section bars, arranged with their webs (4) facing one another at the channel ends (13, 14, 15) of adjoining channels are interconnected by means of clips (20) pushed on to the two arms (2) remote from the channel wall and by means of screwed fasteners which extend through bores in the corners of the corner angle members (11).

### Revendications

1. Liaison à brides entre des canaux de section rectangulaire qui se raccordent entre eux, aux parois latérales (13) de chacun desquels est disposé un nombre de bandes profilées (1) qui correspond au nombre des parois latérales des canaux, qui ont une section transversale sensiblement en forme de U et dont le profil présente des moulures ou courbures (7, 10) intérieures en tant que guides latéraux pour des cornières d'angle (11), insérées entre ceux-ci et la traverse (4) de la bande profilée (1) au niveau de chaque angle du canal, caractérisée en ce que l'un des côtés (2)de la bande profilée (1) de section transversale sensiblement en forme de U et présentant deux côtés (2, 3) constitués chacun par un pli intérieur (5, 9) et un pli extérieur (6, 8) est replié vers l'extérieur depuis le côté ouvert du U et forme entre le pli intérieur (5) et le pli extérieur (6) une fente destinée à recevoir le bord extrême (15) d'un collet (14, 15) en forme de rainure formé à l'extrémité de la paroi latérale du canal, contre lequel s'appuie la bande profilée (1) en ce que le pli intérieur (5) du même côté (2) présente, à une certaine distance de la traverse (4) de la bande profilée (1), une moulure (7) longitudinale qui fait saillie en direction de l'intérieur et qui sert de guide latéral pour une cornière d'angle (11) et en ce que l'autre côté (3) de la bande profilée est recourbé vers l'intérieur est présente, à l'extrémité du pli intérieur (9) une courbure de bordure (10) dirigée vers l'intérieur et servant également de guide latéral situé à la même distance de la traverse (4) que la moulure (7)

2. Liaison à brides selon la revendication 1, caractérisée en ce que les bandes profilées (1) tournées l'une vers l'autre par leur traverse (4) et disposées aux extrêmités (13, 14, 15) de canaux se raccordent l'un à l'autre sont reliees l'une à l'autre au moyen d'agrafes (20) insérées sur les 2 côtés (2) eloignés de paroi du canal et au moyen de liaisons par vis par des trous pratiqués dans les angles des cornières d'angle 11.

0 143 150

FIG. 1

FIG. 2

FIG. 3

FIG. 5

FIG. 4